# EUROPÄISCHE PATENTSCHRIFT

(11) **EP 2 853 369 B1**
(45) Veröffentlichungstag und Bekanntmachung des Hinweises auf die Patenterteilung: **08.08.2018**
(21) Anmeldenummer: 14184439.9
(22) Anmeldetag: 11.09.2014
(51) Int. Cl.: B29C 45/00

(54) **Verfahren und Form zur Herstellung von Dichtplatten im Spritzguss**
Method and mould for the manufacture of sealing plates in injection moulding
Procédé et moule destinés à la fabrication de plaques d'étanchéité moulées par injection

(30) Priorität: 24.09.2013 AT 506132013
(43) Veröffentlichungstag der Anmeldung: 01.04.2015
(73) Patentinhaber: Hoerbiger Kompressortechnik Holding GmbH, 1220 Wien (AT)
(72) Erfinder: Spiegl, Bernhard, 1230 Wien (AT); Janko, Marian, 1060 Wien (AT)
(74) Vertreter: Patentanwälte Pinter & Weiss OG

(56) Entgegenhaltungen:
- WO-A1-01/24986
- JP-A- H 068 293
- JP-B1- 5 244 256

## Beschreibung

Die Erfindung betrifft ein Verfahren sowie eine Form zur Herstellung von aus mehreren über Radialstege verbundenen Dichtringen bestehenden Dichtplatten aus faserverstärktem Kunststoff im Spritzguss. Weiters betrifft die Erfindung auch mit einem derartigen Verfahren beziehungsweise mit einer derartigen Form hergestellte Dichtplatten.

Als Ein- und Auslassventile von Hubkolben-Kompressoren mit größeren Hubvolumina werden heutzutage meist Plattenventile mit einer größeren Anzahl von konzentrisch angeordneten Durchströmöffnungen verwendet, die entweder mittels einer einstückigen Dichtplatte aus Stahl oder Kunststoff abgedeckt werden oder aber mit einzelnen profilierten Ringen zusammenarbeiten. Während die einstückigen Dichtplatten zur Folge der zwangsweise gemeinsamen Bewegung aller Bereiche der Platte eine relativ gleichmäßige Belastung der beim Öffnen und Schließen stark beanspruchten Dicht- und Anschlagflächen ermöglichen, haben sie auch Nachteile hinsichtlich der Strömungsumlenkung und damit einhergehender Strömungsverluste zur Folge der meist nur eben zu realisierenden zusammenarbeiteten Dichtflächen. Ventile mit einzelnen Dichtringen aus faserverstärktem Kunststoff können dagegen relativ einfach mit in Durchströmungsrichtung schräg stehenden Dichtflächen (als sogenannte profilierte Ringe) ausgebildet werden, was geringere Strömungsumlenkung und damit geringere Strömungsverluste ergibt. Profilierte Plattenventile mit Dichtplatten der eingangs genannten Art stellen eine Art Hybrid dar, mit den Vorteilen der einstückigen unprofilierten Dichtplatten (gemeinsame Bewegung) und den Vorteilen der einzelnen profilierten Dichtringe (Effizienz, Robustheit).

Aus faserverstärktem Kunststoff bestehende, ebene oder profilierte Dichtplatten werden nach bisher üblichem Stand der Technik aus Halbzeugscheiben gefräst und sodann überschliffen. Dies verursacht beachtlichen Fertigungs- und Materialaufwand, was die Kosten entsprechend negativ beeinflusst. In kleineren Mengen werden deshalb bereits heute derartige Dichtplatten fertiggespritzt, das heißt die gesamten Schlitze bzw. Durchgangsöffnungen in der Dichtplatte werden in der Form entsprechend abgebildet, womit die Dichtplatte nach dem Spritzguss bereits in ihrer finalen Form vorliegt. Für die Verbesserung der Dichtheit können die Dichtplatten nach dem Spritzguss auch noch überschliffen oder überdreht werden.

Diese an sich effiziente Technologie hat jedoch Nachteile: Auf Grund der Geometrie der Dichtplatte werden beim Spritzgussprozess die Schmelzeströme aufgeteilt und befüllen die zu füllenden Kanäle von beiden Seiten. Beim Zusammentreffen der Schmelzefronten bildet sich eine Bindenaht. Bei faserverstärkten Kunststoffen kann der Effekt beobachtet werden, dass keine Fasern durch die Bindenaht reichen und somit kein Verstärkungseffekt vorliegt. Daraus resultiert, dass die Bindenahtfestigkeit kaum die Festigkeit des Grundwerkstoffes erreicht.

Das Problem unzureichender Bindenahtfestigkeit ist seit langem bekannt und es gibt verschiedene Konzepte ihm zu begegnen. Neben optimierter Prozessführung, wie Einspritzgeschwindigkeit, Druckverlauf und werkzeugseitiger Entlüftung sind auch Überlaufkanäle zur Bindenahtverschmierung bekannt. Häufig wird das Problem über eine Konstruktionsänderung gelöst und dabei die Bindenaht aus den hochbelasteten Zonen verschoben. Ideen wie Ausrichtung der Fasern über elektrostatische Felder sind aufgrund der hohen Viskositäten der verwendeten Kunststoffe nicht machbar. Bindenähte nach oder während ihrer Ausbildung durch zeitgerecht angesteuerte Nadelverschlussdüsen zu durchstoßen oder zu verschmieren wäre an sich möglich, jedoch bei Dichtplatten mit bis zu sechzig Bindenähten pro Platte technisch nicht umsetzbar. Auch Verfahren mit außerhalb der Bindenaht angeordneten Überlaufbereichen mit oder ohne Aktivierung sind bekannt, lassen sich aufgrund der Komplexität und des Platzbedarfs aber nicht anwenden.

WO 01/24986 A1 offenbart ein Verfahren und eine Vorrichtung zum Spritzgießen, wobei die Außenwandungen der Spritzgussform in den Bereichen der sich bildenden Bindenähte so ausgeweitet sind, dass die beiden Fronten der Kunststoff-Schmelzeströme jeweils seitlich abgelenkt und zur Bildung einer "verzahnten" Bindenaht wirbelartig miteinander verschränkt werden.

JP 5244256 B1 offenbart ein Verfahren zum Spritzgießen und eine Spritzgussform, wobei die Lage der Bindenaht nach dem Spritzgießen verändert wird, indem ein außerhalb der Form angeordneter Kolbenmechanismus einen Teil des Materials vor dem Aushärten aus der Form herauszieht.

JP H06 8293 A offenbart ebenfalls ein Verfahren zum Spritzgießen und eine Spritzgussform, wobei die Lage der Bindenaht nach dem Spritzgießen verändert wird, indem ein Kolben einen Teil des Materials vor dem Aushärten aus der Form herauszieht.

Aufgabe der vorliegenden Erfindung ist es ein Verfahren und eine Form der eingangs genannten Art zur Herstellung derartiger Ventilplatten so zu verbessern, dass die beschriebenen Probleme mit den entstehenden Bindenähten zumindest weitestgehend vermieden werden und somit eine Dichtplatte der eingangs genannten Art im Spritzguss hergestellt werden kann, welche die beschriebenen Nachteile der bisher bekannten derartigen Dichtplatten nicht aufweist.

Diese Aufgabe wird gemäß der vorliegenden Erfindung bei einem Verfahren der eingangs genannten Art dadurch gelöst, dass im Bereich von durch das Aufeinandertreffen der Fronten von geteilten Kunststoff-Schmelzeströmen gebildeten Bindenähten wandartige Führungselemente schräg zur Fließrichtung im dadurch vorerst weitestgehend eingeengten Formkanal angeordnet werden, welche die Fronten der Schmelzeströme vor dem Aufeinandertreffen jeweils seitlich zur gegenüberliegenden Begrenzung des Formkanals ablenken und während der weiteren Befüllung des Formkanals aus diesem heraus bewegt werden. Es wird damit die jeweilige Bindenaht im Formkanal schräg verdreht wobei die sich von beiden Seiten nähernden Schmelzefronten jeweils zu einer Seite abgelenkt werden, wobei die Bewegung der Führungselemente aus dem Formkanal heraus, gegen eine von außen aufgebrachte Widerstandskraft, durch die den Formkanal füllende Kunststoffschmelze selbst erfolgt, wobei eine schräge Bindenaht ausgebildet wird, wenn sich das Führungselement aus dem Formkanal heraus bewegt. Die Fließgeschwindigkeit steigt dabei durch die Querschnittsverengung an und die Fasern der Faserverstärkung im Kunststoff werden an der jeweiligen Seite des wandartigen Führungselementes stark orientiert. Nachdem die Schmelzefronten jeweils die Spitze des sich verengenden Kanals erreicht haben beginnt sich ein Druck aufzubauen womit im Wesentlichen erst dann die Schmelze in den Spalt unterhalb des beweglichen wandartigen Führungselementes gedrückt wird. Damit beginnt sich auch unterhalb dieses Führungselementes ein Druck aufzubauen. Wenn sich nun das jeweilige wandartige Führungselement während der weiteren Befüllung des Formkanals nach oben aus diesem herausbewegt kommt es zur Ausbildung einer schrägen Bindenaht wobei sich die Verstärkungsfasern im faserverstärkten Kunststoff auf beiden Seiten des sich nach oben bewegenden Führungselements ebenfalls zumindest teilweise nach oben gerichtet mitbewegen und damit die Bindenaht durchstoßen, womit diese schrägen, verlängerten Bindenähte nun auch von Verstärkungsfasern der jeweils an den Bindenähten verbundenen Kunststoffkörper durchdrungen sind. Durch geeignete Temperaturführung der Schmelze und der Werkzeuge kann dieser Effekt noch optimiert werden, womit bei statischer Belastung eine circa 60%ige Verbesserung und bei Dauerfestigkeit eine circa 100%ige Verbesserung der Bindenahtfestigkeit nachgewiesen werden konnte.

Gemäß einer Weiterbildung des erfindungsgemäßen Verfahrens erfolgt die Einbringung der Kunststoffschmelze in die Form von der Mitte der Dichtplatte aus, vorzugsweise separat für jeden Radialsteg, wobei die Führungselemente ausschließlich im Bereich der Dichtringe angeordnet werden. Es entstehen auf diese Weise Bindenähte ausschließlich im Bereich der Dichtringe, welche weniger belastet sind als die Radialstege, die nicht nur Kräfte zwischen den Ringen übertragen müssen sondern auch eine ausreichende Elastizität zur Verbesserung des Dichtverhaltens der Einzelringe haben sollen.

Die Bewegung der Führungselemente aus dem Formkanal heraus, erfolgt erfindungsgemäß gegen eine von außen aufgebrachte Widerstandskraft, durch die den Formkanal füllende Kunststoffschmelze selbst, wobei der zeitliche Verlauf der Größe dieser Widerstandskraft vorteilhaft während der Füllung der Form variierbar ist. Damit kann auf sehr einfache und effektive Weise Einfluss auf die Ausbildung der Bindenaht sowie auf die eintretende Verstärkung durch die diese Bindenaht letztendlich in der fertigen Dichtplatte durchsetzenden Fasern der Faserverstärkung genommen werden.

Die erfindungsgemäße Form zur Herstellung derartiger Dichtplatten mit dem beschriebenen Verfahren weist im Bereich von durch das Aufeinandertreffen der Fronten von geteilten Kunststoff-Schmelzeströmen gebildeten Bindenähten wandartige Führungselemente schräg zur Fließrichtung der Schmelzeströme im dadurch weitgehend eingeengten Formkanal auf, welche zwischen einer Anfangsstellung, in der beidseits 1-10%, vorzugsweise 4-6%, bevorzugt 5%, und am Boden 0-20%, vorzugsweise 5-15%, bevorzugt 10%, des Formkanals freigegeben sind, und einer Rückzugsstellung, in der die dem Formkanalboden zugewandte Stirnseite des Führungselements mit der umgebenden Formkanalwand abschließt oder geringfügig, vorzugsweise 1-10% der Dicke der Dichtplatte, über diese angehoben ist, bewegbar sind, wobei die Bewegung der Führungselemente aus dem Formkanal heraus, gegen eine von außen aufgebrachte Widerstandskraft, durch die den Formkanal füllende Kunststoffschmelze selbst erfolgt. Mit diesen Ausgestaltungen der wandartigen Führungselemente bzw. deren Erstreckung relativ zu den umgebenden Formkanalwänden sind optimale Verhältnisse geschaffen, um die Schmelzeströme im Bereich der sich bildenden Bindenähte entsprechend zu lenken und zu beeinflussen, was optimale Dichtplatten mit den genannten Festigkeitsverbesserungen ergibt.

In weiterer Ausgestaltung der erfindungsgemäßen Form zur Herstellung der Dichtplatten sind die Einspritzöffnungen im Bereich der Mitte der Form, vorzugsweise separat für jeden Formkanal jedes Radialsteges, und die wandartigen Führungselemente ausschließlich in den Formkanälen der Dichtringe angeordnet. Damit ergeben sich wie erwähnt in der fertigen Dichtplatte Bindenähte nur im Bereich der Dichtringe und nicht im Bereich der Radialstege.

Die wandartigen Führungselemente können in weiterer Ausgestaltung der Erfindung einteilig ausgeführt sein, was die Führung der Schmelze erleichtert. Nach einer anderen bevorzugten Ausgestaltung der Erfindung können diese Führungselemente aber auch aus mehreren einzelnen, mit geringem Abstand nebeneinander angeordneten, vorzugsweise gemeinsam bewegbaren, Elementen bestehen, was die Herstellung der Form insbesonders dann erleichtert, wenn die einzelnen Elemente stiftartig, mit beispielsweise rundem Querschnitt, sind.

Die wandartigen Führungselemente sind gemäß einer anderen Weiterbildung der Erfindung in Umfangsrichtung der Dichtringe gekrümmt ausgeführt, womit in den gekrümmten Formkanälen der einzelnen Dichtringe die gleichen Querschnittsverengungen auf beiden Seiten der wandartigen Führungselemente angestrebt werden können.

In weiterer Ausgestaltung der Erfindung ist vorgesehen, dass die wandartigen Führungselemente an den äußeren Seitenkanten abgerundet und an der dem Formkanalboden zugewandten Stirnseite abgerundet oder dachartig spitz ausgeführt sind. Damit kann das Vorbeiströmen bzw. das Unterströmen an der Seite und an der unteren Stirnseite der Führungselemente in weiten Grenzen beeinflusst werden, was verschiedenste Beeinflussungen der Entstehung und Ausbildung der Bindenähte erlaubt.

Im letztgenannten Zusammenhang vorteilhaft ist auch eine weitere Ausgestaltung der Erfindung, gemäß welcher die dem Formkanalboden zugewandte Stirnseite der wandartigen Führungselemente einzelne, gegenüber der in der Anfangsstellung auf dem Formkanalboden aufstehenden Stirnseite zurückversetzte Durchströmbereiche aufweist. Damit ergibt sich eine exakt definierbare Geometrie der Anfangsstellung mit einem ganz bestimmten freien Querschnitt zum Unterströmen der Führungselemente vor deren Herausbewegen aus der Form.

In besonders bevorzugter Ausgestaltung der Erfindung sind die wandartigen Führungselemente mit einem Winkel von 10-35°, vorzugsweise 15°, abweichend von der jeweiligen Umfangstangente des Formkanals so in diesem angeordnet, dass sich in Fließrichtung der Kunststoffschmelze eine vorzugsweise stetige Verengung ergibt. Damit kommt es zur optimalen Ausbildung der oben bereits beschriebenen Effekte beim beidseitigen Auftreffen der Schmelzefront auf das durch die Führungselemente vorerst gebildete Hindernis im Formkanal.

Die wandartigen Führungselemente sind in weiterer Ausgestaltung der Erfindung mittels Federn und/oder mit hydraulischen, pneumatischen oder elektrischen Aktoren, oder einer Kombination davon, belastet, vorzugsweise mit einer im zeitlichen Verlauf der Größe variierbaren Belastungskraft. Dies ermöglicht auf einfache oder aber auch steuerbare Weise die gewünschte Einflussnahme auf die Bewegung der wandartigen Führungselemente zur gewünschten Ausbildung der Bindenähte.

Die wandartigen Führungselemente können einfach eben oder gebogen schräg im jeweiligen Formkanal angeordnet sein - davon abgesehen können aber auch einzelne oder alle davon V-artig abgeknickt sein, - auch können mehrere der erwähnten einzelnen Elemente in beliebiger Gruppierung vorgesehen sein, was weitere Einflussnahmen auf Entstehung und Ausbildung der Bindenähte ermöglicht.

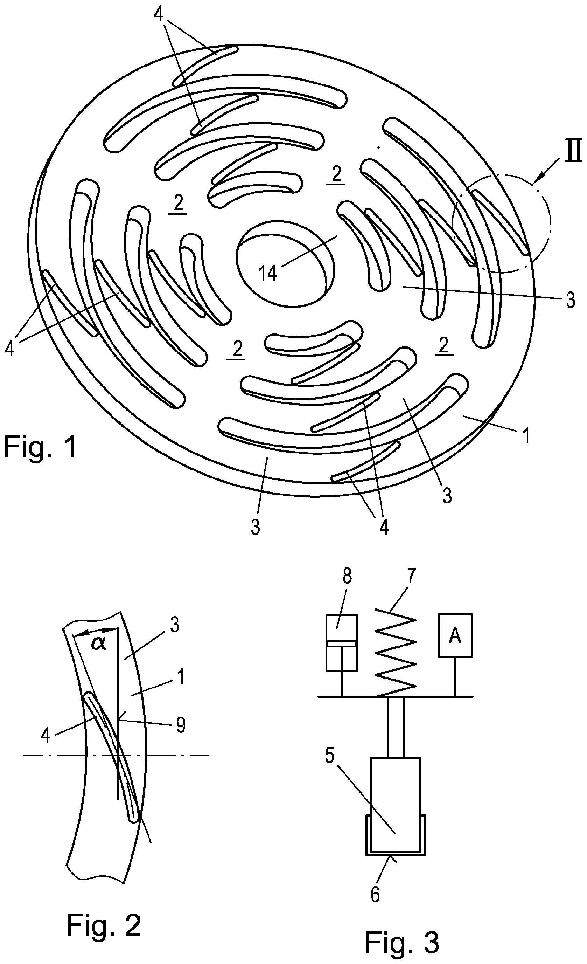

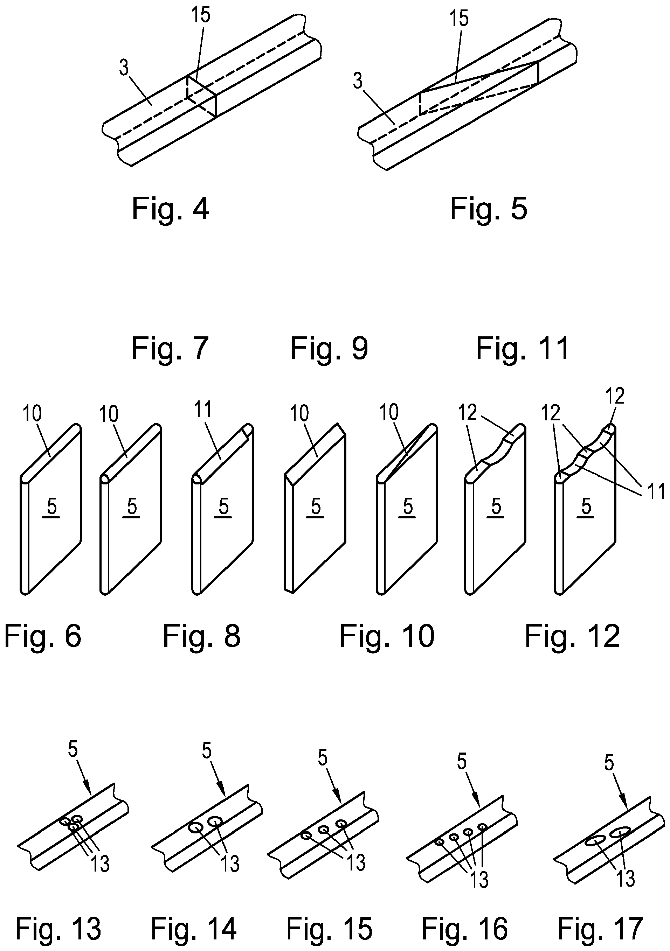

Die Erfindung wird im Folgenden noch anhand der in der Zeichnung schematisch dargestellten Ausführungsbeispiele näher erläutert. Fig.1 zeigt dabei eine erfindungsgemäße, beispielsweise unprofilierte Dichtplatte in perspektivischer Ansicht, Fig.2 zeigt den vergrößerten Ausschnitt II aus Fig.1 in Draufsicht, Fig.3 zeigt eine schematische Darstellung einer Form zur Herstellung einer Dichtplatte gemäß Fig.1 und 2, Fig. 4 und 5 zeigen schematisch Bindenähte der sich bei der Herstellung einer Dichtplatte einstellenden Art (Fig. 4 ohne und Fig. 5 mit wandartigen Führungselementen gemäß der vorliegenden Erfindung), Fig. 6 bis 12 zeigen unterschiedlich ausgebildete wandartige Führungselemente zur Verwendung in Verfahren und Form nach der vorliegenden Erfindung und Fig. 13 bis 17 zeigen unterschiedliche Anordnungen von aus einzelnen Elementen bestehenden wandartigen Führungselementen.

Die in Fig. 1 dargestellte Dichtplatte 1 besteht aus drei über Radialstege 2 verbundenen Dichtringen 3 und ist aus faserverstärktem Kunststoff im Spritzguss hergestellt. Zu sehen ist hier die Dichtseite der Dichtplatte, welche im fertigen, nicht dargestellten Plattenventil mit dem Ventilsitz zusammenarbeitet - es handelt sich hier um eine Dichtplatte mit ebener Dichtfläche, welche nach dem Spritzguss zur Verbesserung der Dichtheit noch überschliffen wird. Die Dichtplatte 1 gemäß Fig. 1 und 2 ist noch nicht überschliffen, weshalb noch sichelförmige Erhebungen 4 zu erkennen sind deren Entstehung und Funktion nachfolgend noch näher beschrieben wird. Abgesehen von ebenen Dichtplatten gemäß Fig. 1 und 2 könnten gemäß der Erfindung aber auch sogenannte profilierte Dichtplatten hergestellt werden, bei denen die einzelnen Dichtringe 3 mit am Umfang verlaufenden Fasen versehen sind, welche ihrerseits mit entsprechenden Dichtflächen am nicht dargestellten Ventilsitz zusammenarbeiten - in diesem Falle wären die Radialstege 2 auf der Dichtseite gegenüber diesen seitlichen Fasen vertieft ausgebildet.

Beim Spritzen der dargestellten Dichtplatte 1 wird faserverstärkter Kunststoff vom innersten Ring 14 her, der beispielsweise einen hier nicht ersichtlichen Schirmanguß aufweist, zugeführt, womit im weiteren die Formkanäle für die Radialstege 2 versorgt werden. Während des fortgesetzten Befüllens der Form strömen damit vorerst vier Schmelzeströme entlang der Radialstege 2 nach außen und werden jeweils an den Kreuzungen mit den Dichtringen 3 nach links und rechts aufgeteilt. Diese aufgeteilten Kunststoff-Schmelzeströme befüllen also die Formkanäle für die Dichtringe 3 jeweils von beiden Seiten her und treffen im Mittelbreich zwischen den Radialstegen 2 aufeinander. Ohne die erfindungsgemäßen wandartigen Führungselemente 5 (siehe Fig. 3 und Fig. 6 bis 17) würden sich im Bereich des Aufeinandertreffens der Fronten der beiden Schmelzeströme Bindenähte 15 im Wesentlichen gemäß Fig. 4 ergeben, was insbesonders bei faserverstärkten Kunststoffschmelzen eine verringerte Festigkeit der Dichtplatte 1 in diesem Bereich bedingt, da die Fasern der Faserverstärkung der beiden aufeinandertreffenden Schmelzeströme nicht durch die Bindenaht 15 reichen und somit dort keine Verstärkung ergeben.

Beim erfindungsgemäßen Verfahren wird deshalb im Bereich der durch das Aufeinandertreffen der Fronten von geteilten Kunststoff-Schmelzeströmen gebildeten Bindenähte 15 jeweils ein wandartiges Führungselement 5 schräg zur Fließrichtung im dadurch vorerst weitestgehend eingeengten Formkanal 6 angeordnet wie dies schematisch in Fig. 3 dargestellt ist. Diese Führungselemente 5 werden während der weiteren Befüllung des Formkanals 6 aus diesem herausbewegt (in Fig. 3 nach oben) und zwar aus der in Fig. 3 dargestellten Anfangsstellung bis in eine Rückzugsstellung, in der die formwandseitige Unterseite mit der umgebenden Formkanalwand abschließt oder geringfügig über diese angehoben ist. Durch geringfügiges Anheben über die umgebende Formkanalwand entstehen die Erhebungen 4 wie in Fig. 1 und 2 dargestellt, die anschließend beim Überschleifen der Dichtplatte 1 entfernt werden.

Die Bewegung der Führungselemente 5 erfogt gemäß Fig. 3 über den zwischen Formkanalboden und Führungselement 5 bei der fortgesetzten Befüllung entstehenden Druck im zugeführten Kunststoff (gegen die Kraft einer Feder 7) oder aber mittels eines beispielsweise elektrischen Aktors A oder mit einem pneumatischen, oder hydraulischen Zylinder 8, oder einer Kombination davon, erfolgen, wobei der zeitliche Verlauf der Bewegung oder des wirkenden Gegendruckes auch auf hier nicht weiter dargestellte Weise gesteuert werden kann.

Aus Fig. 2 ist deutlich zu ersehen, dass bei der für diese Dichtplatte 1 verwendeten Form die wandartigen Führungselemente 5 in Umfangsrichtung der Dichtringe 3 gekrümmt sind und an den äußeren Seitenkanten Abrundungen aufweisen. Der Winkel a, den die wandartigen Führungselemente 5 mit der Umfangstangente 9 der Dichtringe 3 bzw. des entsprechenden Formkanals einschließen liegt vorzugsweise im Bereich von 10-35°, womit die von beiden Seiten auf die Führungselemente 5 treffenden Schmelzeströme entsprechend abgelenkt werden wobei sich durch die beidseitig gleichmäßige Verengung des Formkanals erhöhter Druck auch unter den Führungselementen 5 aufbaut, welcher trachtet, diese im Laufe der weiteren Befüllung aus dem Formkanal nach oben zu schieben. Es ergibt sich damit eine starke Ausrichtung der Fasern der Faserverstärkung in der Kunststoffschmelze entlang der sich dabei nach oben aus der Form bewegenden Führungselemente 5, was die gewünschte Schrägstellung der Bindenaht 15 (siehe Fig. 5) bei gleichzeitigem Durchdringen derselben mit Fasern der Faserverstärkung von beiden Schmelzeströmen ergibt. In der in Fig. 3 dargestellten Anfangsstellung der wandartigen Führungselemente 5 sind beidseits vorzugsweise etwa 5% und am Boden etwa 10% des Formkanals freigegeben, was eine sehr vorteilhafte Ausbildung der Bindenaht 15 mit hervorragenden Festigkeitswerten der Dichtplatte 1 ergibt. In den Fig. 6 bis 12 sind verschiedene Möglichkeiten zur vorteilhaften Ausbildung der Stirnseiten 10 der wandartigen Führungselemente 5 dargestellt, wobei unter Stirnseite 10 die gemäß Fig. 3 dem Formkanalboden zugewandte Unterseite der Führungselemente 5 zu verstehen ist, welche in der Anfangsstellung den Formkanal an der Unterseite einengt. In Fig. 6 ist die Stirnseite 10 gerade ausgebildet (wie auch in Fig. 3 angedeutet). Gemäß Fig. 7 ist die Stirnseite 10 über die ganze Länge mit einer Abrundung versehen. In Fig. 8 ist in der Mitte eine Abschrägung zu sehen, wobei die Randbereiche nicht abgeschrägt sind, womit das Führungselement 5 in der Anfangsstellung am Formboden aufgestellt werden kann. Fig. 9 und 10 zeigen dachartige Abschrägungen der Stirnseite 10, wobei bei der Ausführung nach Fig. 10 die Firstkante dieser Abschrägung quer von einer Seite des Führungselementes zur anderen verläuft, was das Unterströmen des Führungselementes 5 gezielt beeinflusst und damit gezielten Einfluss auf die Ausbildung der entstehenden Bindenaht nimmt. Die Ausführungen nach Fig. 11 und 12 weisen Durchströmbereiche 11 und in der Anfangsstellung auf dem Formkanalboden aufstehende Außenbereiche 12 auf.

Abgesehen von der Ausbildung der wandartigen Führungselemente 5 gemäß Fig. 3 und 6 bis 12 als einstückige Teile könnten diese Führungselemente 5 gemäß Fig. 13 bis 17 aber auch aus mehreren einzelnen, mit geringem Abstand nebeneinander angeordneten, vorzugsweise gemeinsam bewegbaren, Elementen bestehen, die mit 13 angedeutet sind. Gemäß den Fig. 13 bis 16 sind im Querschnitt runde Stifte verwendet - gemäß Fig. 17 ist der Querschnitt dieser einzelnen Elemente 13 oval. Es ergeben sich auch damit verschiedenste Möglichkeiten zur Einflussnahme auf die Schmelzeströme im Bereich der entstehenden Bindenähte. Weiters könnten sowohl mit den Führungselementen 5 nach Fig. 6 bis 12 sowie auch mit denen nach Fig. 13 bis 17 Bindenähte hergestellt werden, die abweichend von Fig. 5 nicht nur im Wesentlichen eben schräg stehen sondern V-förmige oder ähnliche Geometrien haben, was ebenfalls zur Verbesserung der Qualität der erhaltenen Dichtplatten 1 beitragen kann.

## Patentansprüche

1. Verfahren zur Herstellung von aus mehreren, über Radialstege (2) verbundenen Dichtringen (3) bestehenden Dichtplatten (1) aus faserverstärktem Kunststoff im Spritzguss, wobei im Bereich von durch das Aufeinandertreffen der Fronten von geteilten Kunststoff-Schmelzeströmen gebildeten Bindenähten (15) wandartige Führungselemente (5) schräg zur Fließrichtung im dadurch vorerst weitestgehend eingeengten Formkanal (6) angeordnet werden, welche die Fronten der Schmelzeströme vor dem Aufeinandertreffen jeweils seitlich zur gegenüberliegenden Begrenzung des Formkanals (6) ablenken und während der weiteren Befüllung des Formkanals (6) aus diesem herausbewegt werden, wobei die Bewegung der Führungselemente (5) aus dem Formkanal (6) heraus, gegen eine von außen aufgebrachte Widerstandskraft, durch die den Formkanal (6) füllende Kunststoffschmelze selbst erfolgt, wobei eine schräge Bindenaht ausgebildet wird, wenn sich das Führungselement aus dem Formkanal heraus bewegt.

2. Verfahren nach Anspruch 1, **dadurch gekennzeichnet, dass** die Einbringung der Kunststoffschmelze in die Form von der Mitte der Dichtplatte (1) aus, vorzugsweise separat für jeden Radialsteg (2), erfolgt und dass die Führungselemente (5) ausschließlich im Bereich der Dichtringe (3) angeordnet werden.

3. Verfahren nach Anspruch 1 oder 2, **dadurch gekennzeichnet, dass** der zeitliche Verlauf der Größe der Widerstandskraft während der Befüllung der Form variierbar ist.

4. Form zur Herstellung von aus mehreren, über Radialstege (2) verbundenen Dichtringen (3) bestehenden Dichtplatten (1) aus faserverstärktem Kunststoff im Spritzguss, wobei im Bereich von durch das Aufeinandertreffen der Fronten von geteilten Kunststoff-Schmelzeströmen gebildeten Bindenähten (15) wandartige Führungselemente (5) schräg zur Fließrichtung der Schmelzeströme im dadurch weitgehend eingeengten Formkanal (6) angeordnet sind, welche zwischen einer Anfangsstellung, in der beidseits 1-10%, vorzugsweise 4-6%, bevorzugt 5%, und am Boden 0-20%, vorzugsweise 5-15%, bevorzugt 10%, des Formkanals (6) freigegeben sind, und einer Rückzugsstellung, in der die dem Formkanalboden zugewandte Stirnseite des Führungselements mit der umgebenden Formkanalwand abschließt oder geringfügig, vorzugsweise 1-10% der Dicke der Dichtplatte (1), über diese angehoben ist, bewegbar sind, wobei die Bewegung der Führungselemente (5) aus dem Formkanal (6) heraus, gegen eine von außen aufgebrachte Widerstandskraft, durch die den Formkanal (6) füllende Kunststoffschmelze selbst erfolgt.

5. Form nach Anspruch 4, **dadurch gekennzeichnet, dass** die Einspritzöffnungen im Bereich der Mitte der Form, vorzugsweise separat für den Formkanal jedes Radialsteges (2), und die wandartigen Führungselemente (5) ausschließlich in den Formkanälen der Dichtringe (3) angeordnet sind.

6. Form nach Anspruch 5, **dadurch gekennzeichnet, dass** die wandartigen Führungselemente (5) einteilig ausgeführt sind.

7. Form nach Anspruch 6, **dadurch gekennzeichnet, dass** die wandartigen Führungselemente (5) aus mehreren einzelnen, mit geringem Abstand nebeneinander angeordneten, vorzugsweise gemeinsam bewegbaren, Elementen (13) bestehen.

8. Form nach Anspruch 6 oder 7, **dadurch gekennzeichnet, dass** die wandartigen Führungselemente (5) in Umfangsrichtung der Dichtringe (3) gekrümmt sind.

9. Form nach einem der Ansprüche 4 bis 8, **dadurch gekennzeichnet, dass** die wandartigen Führungselemente (5) an den äußeren Seitenkanten abgerundet und an der dem Formkanalboden zugewandten Stirnseite (10) abgerundet oder dachartig spitz ausgeführt sind.

10. Form nach einem oder mehreren der Ansprüche 4 bis 9, **dadurch gekennzeichnet, dass** die dem Formkanalboden zugewandte Stirnseite (10) der wandartigen Führungselemente (5) einzelne, gegenüber der in der Anfangsstellung auf dem Formkanalboden aufsitzenden Stirnseite (10) zurückversetzte Durchströmbereiche (11) aufweist.

11. Form nach einem oder mehreren Ansprüchen 4 bis 10, **dadurch gekennzeichnet, dass** die wandartigen Führungselemente (5) mit einem Winkel von 10-35°, vorzugsweise 15°, abweichend von der jeweiligen Umfangstangente (9) des Formkanals (6) so in diesem angeordnet sind, dass sich in Fließrichtung der Kunststoffschmelze eine vorzugsweise stetige Verengung ergibt.

12. Form nach einem oder mehreren der Ansprüche 4 bis 11, **dadurch gekennzeichnet, dass** die wandartigen Führungselemente (5) mittels Federn (7) und/oder mit hydraulischen, pneumatischen oder elektrischen Aktoren (8, A), oder einer Kombination davon, belastet sind, vorzugsweise mit einer im zeitlichen Verlauf der Größe variierbaren Belastungskraft.

13. Form nach einem oder mehreren der Ansprüche 4 bis 12, **dadurch gekennzeichnet, dass** die wandartigen Führungselemente (5) V-artig abgeknickt sind.

## Claims

1. A method for producing sealing plates (1) of fiber-reinforced plastic by injection molding consisting of a plurality of sealing rings (3) connected by radial webs (2), wherein wall-type guide elements (5) are arranged obliquely to the direction of flow in the mold channel (6), which is therefore at first largely constricted, in the region of weld lines (15) formed by the convergence of the fronts of divided plastic melt streams, said guide elements deflecting each of the fronts of the melt streams to the side toward the opposing border of the mold channel (6) before they converge and being moved out of the mold channel (6) during the further filling of same, wherein the movement of the guide elements (5) out of the mold channel (6) takes place against an externally applied resistance force through the plastic melt filling the mold channel (6), wherein an oblique weld line is being formed when the guide element moves out of the mold channel.

2. The method according to claim 1, **characterized in that** the plastic melt is introduced into the mold from the center of the sealing plate (1), preferably separately for each radial web (2), and the guide elements (5) are arranged only in the region of the sealing rings (3).

3. The method according to claim 1 or 2, **characterized in that** the curve of the size of the resistance force as a function of time can be varied during the filling of the mold

4. The mold for production of sealing plates (1) which consist of a plurality of sealing rings (3) connected by radial webs (2), made of fiber-reinforced plastic by injection molding, wherein wall-type guide elements (5) are arranged obliquely to the direction of flow of the melt streams in the mold channel (6), which is thereby largely constricted in the region of weld lines (15) formed by the convergence of the fronts of the divided plastic melt streams, these guide elements being movable between an initial position, in which 1-10%, preferably 4-6%, especially 5% of the mold channel (6) is cleared on both sides and 0-20%, preferably 5-15%, especially 10% of the mold channel is cleared at the bottom, and a retraction position in which the end face of the guide element facing the bottom of the mold channel is flush with the surrounding mold channel wall or is elevated slightly above it, preferably amounting to 1-10% of the thickness of the sealing plate (1), wherein the movement of the guide elements (5) out of the mold channel (6) takes place against an externally applied resistance force through the plastic melt filling the mold channel (6).

5. A mold according to claim 4, **characterized in that** the injection ports are arranged in the region of the center of the mold, preferably separately for the mold channel of each radial web (2), and the wall-type guide elements (5) are arranged exclusively in the mold channels of the sealing rings (3).

6. The mold according to claim 5, **characterized in that** the wall-type guide elements (5) are designed in one piece.

7. The mold according to claim 6, **characterized in that** the wall-type guide elements (5) consist of a plurality of individual elements (13) that are arranged side by side with a slight distance between them, preferably being jointly movable.

8. The mold according to claim 6 or 7, **characterized in that** the wall-type guide elements (5) are curved in the circumferential direction of the sealing rings (3).

9. The mold according to any one of claims 4 through 8, **characterized in that** the wall-type guide elements (5) are rounded on the outer side edges and are rounded on the end face (10) facing the bottom of the mold channel or they are designed with a point like a rooftop.

10. The mold according to any one or more of claims 4 through 9, **characterized in that** the end face (10) of the wall-type guide elements (5), said faces turned toward the bottom of the mold channel, has individual flow-through regions (11) that are set back with respect to the end face (10) sitting on the bottom of the mold channel in the initial position.

11. The mold according to any one or more of claims 4 through 10, **characterized in that** the wall-type guide elements (5) are arranged at an angle of 10-35°, preferably 15°, in deviation from the respective circumferential tangent (9) to the mold channel (6), so as to form a preferably continuous constriction in the direction of flow of the plastic melt.

12. The mold according to any one or more of claims 4 through 11, **characterized in that** the wall-type guide elements (5) are put under a load by means of springs (7) and/or with hydraulic, pneumatic or electric actuators (8, A), or a combination thereof, preferably with a load force that can be varied in the curve of the variable over time.

13. The mold according to any one or more of claims 4 through 12, **characterized in that** the wall-type guide elements (5) form a V-shaped angle.

## Revendications

1. Procédé de fabrication par moulage par injection de plaques d'étanchéité (1) constituées de plusieurs bagues d'étanchéité (3) reliées par le biais de nervures radiales (2) à partir de matière synthétique renforcée par des fibres, des éléments de guidage (5) en forme de parois étant, dans la région de joints de liaison (15) formés par la rencontre des fronts de flux de matière synthétique fondue séparés, disposés de manière inclinée par rapport à la direction d'écoulement dans le canal de moulage (6) ainsi rétréci dans un premier temps dans une très large mesure, lesquels éléments de guidage dévient les fronts des flux de matière fondue avant leur rencontre respectivement latéralement par rapport à la limite opposée du canal de moulage (6) et étant, pendant le remplissage ultérieur du canal de moulage (6), déplacés hors de celui-ci, le déplacement des éléments de guidage (5) hors du canal de moulage (6) s'effectuant au moyen de la matière synthétique fondue elle-même remplissant le canal de moulage (6), à l'encontre d'une force de résistance appliquée depuis l'extérieur, un joint de liaison incliné étant formé lorsque l'élément de guidage est déplacé hors du canal de moulage.

2. Procédé selon la revendication 1, **caractérisé en ce que** l'introduction de la matière synthétique fondue dans le moule s'effectue à partir du centre de la plaque d'étanchéité (1), de préférence séparément pour chaque nervure radiale (2), et **en ce que** les éléments de guidage (5) sont disposés exclusivement dans la région des bagues d'étanchéité (3).

3. Procédé selon la revendication 1 ou 2, **caractérisé en ce que** la variation dans le temps de l'amplitude de la force de résistance pendant le remplissage du moule peut être modifiée.

4. Moule servant à la fabrication par moulage par injection de plaques d'étanchéité (1) constituées de plusieurs bagues d'étanchéité (3) reliées par le biais de nervures radiales (2) à partir de matière synthétique renforcée par des fibres, des éléments de guidage (5) en forme de parois étant, dans la région de joints de liaison (15) formés par la rencontre des fronts de flux de matière synthétique fondue séparés, disposés de manière inclinée par rapport à la direction d'écoulement des flux de matière fondue dans le canal de moulage (6) ainsi rétréci dans une très large mesure, lesquels éléments de guidage sont déplaçables entre une position de départ dans laquelle, de part et d'autre, 1-10 %, de préférence 4-6 %, de manière particulièrement préférée 5 %, et au niveau du fond, 0-20 %, de préférence 5-15 %, de manière particulièrement préférée 10 % du canal de moulage (6) sont dégagés et une position de retrait dans laquelle la face frontale, tournée vers le fond de canal de moulage, de l'élément de guidage se termine par la paroi de canal de moulage environnante ou est relevée légèrement au-dessus de celle-ci, de préférence sur 1 à 10 % de l'épaisseur de la plaque d'étanchéité (1), le déplacement des éléments de guidage (5) hors du canal de moulage (6) s'effectuant au moyen de la matière synthétique fondue elle-même remplissant le canal de moulage (6), à l'encontre d'une force de résistance appliquée depuis l'extérieur.

5. Moule selon la revendication 4, **caractérisé en ce que** les orifices d'injection sont disposés dans la région du centre du moule, de préférence séparément pour le canal de moulage de chaque nervure radiale (2), et **en ce que** les éléments de guidage (5) en forme de parois sont disposés exclusivement dans les canaux de moulage des bagues d'étanchéité (3).

6. Moule selon la revendication 5, **caractérisé en ce que** les éléments de guidage (5) en forme de parois sont réalisés d'un seul tenant.

7. Moule selon la revendication 6, **caractérisé en ce que** les éléments de guidage (5) en forme de parois sont constitués de plusieurs éléments individuels (13) disposés à faible distance les uns à côté des autres, de préférence déplaçables conjointement.

8. Moule selon la revendication 6 ou 7, **caractérisé en ce que** les éléments de guidage (5) en forme de parois sont courbés dans la direction périphérique des bagues d'étanchéité (3).

9. Moule selon l'une des revendications 4 à 8 **caractérisé en ce que** les éléments de guidage (5) en forme de parois sont réalisés de manière arrondie au niveau des arêtes latérales extérieures et de manière arrondie ou de manière pointue en forme de toit au niveau de la face frontale (10) tournée vers le fond de canal de moulage.

10. Moule selon l'une ou plusieurs des revendications 4 à 9, **caractérisé en ce que** la face frontale (10), tournée vers le fond de canal de moulage, des éléments de guidage (5) en forme de parois comprend des régions d'écoulement (11) en retrait par rapport à la face frontale (10) reposant sur le fond de canal de moulage dans la position de départ.

11. Moule selon l'une ou plusieurs des revendications 4 à 10, **caractérisé en ce que** les éléments de guidage (5) en forme de parois sont disposés dans le canal de moulage de manière à s'écarter de la tangente circonférentielle (9) respective du canal de moulage (6) suivant un angle de 10-35°, de préférence de 15°, de telle sorte qu'il en résulte un rétrécissement de préférence constant dans la direction d'écoulement de la matière synthétique fondue.

12. Moule selon l'une ou plusieurs des revendications 4 à 11, **caractérisé en ce que** les éléments de guidage (5) en forme de parois sont sollicités au moyen de ressorts (7) et/ou à l'aide d'actionneurs (8, A) hydrauliques, pneumatiques ou électriques, ou d'une combinaison de ceux-ci, de préférence par une force de sollicitation pour laquelle la variation dans le temps de l'amplitude peut être modifiée.

13. Moule selon l'une ou plusieurs des revendications 4 à 12, **caractérisé en ce que** les éléments de guidage (5) en forme de parois sont coudés en forme de V.
